# EUROPÄISCHE PATENTSCHRIFT

(11) **EP 0 966 724 B1**
(45) Veröffentlichungstag und Bekanntmachung des Hinweises auf die Patenterteilung: **21.11.2001**
(21) Anmeldenummer: 98913637.9
(22) Anmeldetag: 04.03.1998
(51) Int. Cl.: G06K 11/00

(54) **VORRICHTUNG UND VERFAHREN ZUM ERFASSEN BESTIMMTER BEWEGUNGSZUSTÄNDE EINES BENUTZERS**
METHOD AND DEVICE FOR DETECTING SPECIFIC STATES OF MOVEMENT OF A USER
PROCEDE ET DISPOSITIF PERMETTANT DE DETECTER DES ETATS DE MOUVEMENT D'UN UTILISATEUR

(30) Priorität: 07.03.1997 DE 19709456
(43) Veröffentlichungstag der Anmeldung: 29.12.1999
(73) Patentinhaber: Klein, Maximilian, 80804 München (DK); Lutz, Peter Jun, 80804 München (DE)
(72) Erfinder: Klein, Maximilian, 80804 München (DK); Lutz, Peter Jun, 80804 München (DE)
(74) Vertreter: Herzog, Markus, Dipl.-Phys. Dr.
(86) Internationale Anmeldenummer: EP9801216
(87) Internationale Veröffentlichungsnummer: WO9840843

(56) Entgegenhaltungen:
- EP-A- 0 761 266
- WO-A-96/01448
- US-A- 4 660 828
- US-A- 5 283 555
- US-A- 5 409 226

## Beschreibung

Die Erfindung betrifft eine Vorrichtung zum Erfassen bestimmter Bewegungszustände des Körpers eines Benutzers und zur Erzeugung von dem Erfassungsergebnis entsprechenden Signalen zur Weiterverarbeitung in einer Datenverarbeitungsanlage, umfassend eine Lagervorrichtung für den Körper des Benutzers, welche eine auf einem Basisteil kippbar gelagerte Stützeinheit mit einer Stützfläche zur Abstützung des Körpers des Benutzers umfaßt, sowie eine Sensoreinrichtung zur Erfassung der Richtung und des Betrages der Position der Projektion des Körperschwerpunkts in die Stützfläche relativ zu einer vorbestimmten Ursprungsposition in der Stützfläche aus der Richtung und dem Betrag einer Verkippung der Stützfläche und zur Erzeugung entsprechender Sensorsignale.

Allgemein bekannte Vorrichtungen zum Erfassen bestimmter Bewegungszustände eines Benutzers sind für eine Bedienung per Hand (z.B. Maus, Joystick oder Trackball) oder per Fuß (siehe beispielsweise DE 43 36 153 C1 oder DE 44 45 861 A1) ausgelegt und beanspruchen lediglich die Motorik einzelner Gliedmaßen. Dies ist bei der Bedienung einer Datenverarbeitungsanlage mit einem herkömmlichen Datensichtgerät insofern von Vorteil, als der Benutzer so in der Lage ist, seinen Kopf ruhig zu halten und den Blick auf den Bildschirm des Datensichtgeräts zu fixieren.

Bei bestimmten Anwendungen, beispielsweise bei Computerspielen oder computerunterstützter Konstruktion (CAD: Computer-Aided Design), wird jedoch in Zukunft die visuelle Ausgabe zunehmend über Datensichtgeräte erfolgen, die am Kopf des Benutzers befestigt sind, sein gesamtes Blickfeld ausfüllen, die Bewegungen des Kopfes des Benutzers erfassen und die Bildschirmanzeige den erfaßten Kopfbewegungen anpassen (sogenannte Cyber-Helme). Durch diese Technik soll beim Benutzer der Eindruck hervorgerufen werden, daß er sich in einem virtuellen Raum (cyberspace) befindet, und so die Illusion einer virtuellen Realität erzeugt werden.

Bei Verwendung derartiger Cyber-Helme ist es aber für den Benutzer nicht länger erforderlich, relativ zum Datensichtgerät eine bestimmte Körperhaltung einzunehmen. Vielmehr leidet der Eindruck virtueller Realität darunter, wenn die Fortbewegung in diesem virtuellen Raum nicht durch entsprechende reale Bewegungen der Beine und des Körpers des Benutzers gesteuert werden kann. Insbesondere vermögen Lösungen nicht zufriedenzustellen, bei denen über die Erfassung von Hand- bzw. Armbewegungen mittels sogenannter Cyber-Handschuhe nicht nur manuelle Tätigkeiten im virtuellen Raum, sondern beispielsweise durch Zeigen der gewünschten Richtung auch die Fortbewegung in diesem virtuellen Raum gesteuert wird.

Im Stand der Technik wurden daher eine ganze Reihe von Vorrichtungen vorgeschlagen, welche in der Lage sind, Bewegungen der Beine und des Körpers des Benutzers erfassen und entsprechende Erfassungssignale zur Weiterverarbeitung in einer Datenverarbeitungsanlage, beispielsweise einem Personal Computer, bereitzustellen. Eine derartige Vorrichtung ist aus der gattungsbildenden WO-A-96/06664 bekannt. Bei dieser Vorrichtung ist eine Stützfläche zur Abstützung des Körpers des Benutzers auf einer Basisplatte kippbar gelagert, und zwar mittels eines Kardan-Gelenks, das ein Verdrehen der Stützfläche um eine vertikale Achse verhindert. In einigem Abstand von dem Kardan-Gelenk ist ein herkömmlicher Joy-Stick angeordnet, an dessen Betätigungshebel eine Kugel befestigt ist. Die Kugel ist in einem mit der Stützfläche verbundenen Schacht gleitverschieblich aufgenommen, so daß mittels des Joy-Sticks Schwerpunktsverlagerungen des Benutzers aufgrund des hieraus resultierenden Verkippens der Stützfläche erfaßt werden können. Allerdings ist die bekannte Vorrichtung auf die Erfassung zweier Bewegungsfreiheitsgrade, beispielsweise Richtung und Betrag der Schwerpunktsverlagerung, beschränk. Auspruch 1 ist von diesem Dokument abgegrenzt.

Die US-A-4 817 950, die US-A-4 488 017, die US-A-5 405 152, die WO-A-96/35494, die EP-A-0 761 266 und die US-A-5 409 226 offenbaren weitere bekannte Vorrichtungen, welche wie die Vorrichtung gemäß der WO-A-96/06664 der Erfassung von lediglich zwei Freiheitsgraden einer Schwerpunktsverlagerung des Benutzers dienen, jedoch jeweils unterschiedliche Lagerung und Sensorik aufweisen.

Die aus der WO-A-96/35494 bekannte Vorrichtung unterscheidet sich von den anderen Vorrichtungen des Standes der Technik vor allem durch die Interpretation der Sensorsignale bei der weiteren Datenverarbeitung.

Die in der US-A-5 405 152 bzw. der US-A-4 509 226 beschriebenen Vorrichtungen sind nicht nur als Sensorvorrichtung zur Erfassung der Schwerpunktsverlagerung des Benutzers ausgebildet, sondern umfassen auch Stellvorrichtungen, welche es ermöglichen, dem Benutzer sich ändernde Randbedingungen der Computersimulation, beispielsweise Wechsel von ebenem in hügeliges Gelände, Reaktionen der Computersimulation auf seine Bewegungen und dergleichen körperlich zu vermitteln.

Aus der WO-A-96/36955 ist eine Vorrichtung bekannt, welche es dem Benutzer ermöglicht, tatsächliche Gehbewegungen auszuführen, und in Abhängigkeit der gehbedingten Abweichung des Benutzers von einer vorbestimmten Ursprungsposition in der Stützfläche vorgesehene Stellvorrichtungen derart betätigt, daß der Benutzer trotz der Gehbewegung in die vorbestimmte Ursprungsposition zurückgeführt wird.

Die US-A-4 660 828 offenbart eine Sportsimulatorvorrichtung, wobei eine Person auf einer nicht kippbaren Fussplatte steht und dabei eine in zwei orthogonalen Richtungen bewegbare und die zu einem Sichtgerät zu übertragenden Signale erzeugende Griffstange festhält. Fig. 9-11 dieses Dokuments zeigen eine Ausführungform, wobei die Fussplatte zusätzlich um eine vertikale Achse verschwenkt werden kann. Auch in dieser Ausführungsform ist die Fussplatte nicht kippbar.

Die GB-A-2 038 597 offenbart eine gattungsähnliche Vorrichtung, bei welcher lediglich ein einziger Freiheitsgrad der Bewegung des Benutzers, beispielsweise eine Drehung um eine vertikale Achse, erfaßt und in ein entsprechendes Signal umgewandelt wird.

Da bei den vorstehend diskutierten bekannten Vorrichtungen lediglich zwei, bei der GB-A-2 038 597 sogar nur ein einziger Freiheitsgrad erfaßt werden können, müssen eine ganze Reihe von Bewegungsarten, beispielsweise Sprünge, von Hand, beispielsweise durch Drücken eines Knopfes, eingegeben werden, worunter der Eindruck der virtuellen Realität leidet.

Demgegenüber ist es Aufgabe der vorliegenden Erfindung, eine Vorrichtung der eingangs genannten Art bereitzustellen, die es ermöglicht, beim Benutzer den Eindruck virtueller Realität zu verstärken.

Diese Aufgabe wird bei einer gattungsgemäßen Vorrichtung erfindungsgemäß dadurch gelöst, daß die Stützfläche auf dem Basisteil ferner um eine im wesentlichen vertikale Achse drehbar oder/und in Richtung dieser im wesentlichen vertikalen Achse bewegbar gelagert ist, und daß die Sensoreinrichtung ferner zur Erfassung der Richtung und des Betrages einer Drehbewegung des Körpers des Benutzers um die im wesentlichen vertikale Achse oder/und zur Erfassung zumindest des Betrages einer Vertikalbewegung des Körperschwerpunktes, sowie zur Erzeugung entsprechender Sensorsignale ausgebildet ist. Mit Hilfe des erfindungsgemäßen, von den Anmeldern als "CYBERSURFER" bezeichneten Geräts können nicht nur Verlagerungen des Körpergewichts des Benutzers erfaßt und zur Steuerung der Fortbewegung im virtuellen Raum herangezogen werden, sondern auch Drehungen und Vertikalbewegungen des Benutzers. Dies ist insbesondere in Verbindung mit Computerspielen interessant, bei denen Sportarten, wie Surfen, Snowboarden oder Skateboard-Fahren, simuliert werden, bzw. bei denen der virtuelle Körper des Benutzers virtuelle Hindernisse, wie Bachläufe, Schluchten oder dergleichen, überspringen oder an Felswänden oder dergleichen hinaufklettern muß.

Üblicherweise steht der Benutzer auf dem CYBERSURFER, so daß er sich zur Steuerung seiner Fortbewegung im virtuellen Raum tatsächlich im realen Raum nicht von der Stelle bewegen muß. Dies ist insofern wichtig, als der Benutzer durch die Vereinnahmung sein s gesamten Blickfelds durch den Cyber-Helm seiner realen Umgebung gegenüber blind ist und sich somit nicht sicher in ihr bewegen könnte. Somit kann mit der erfindungsgemäßen Vorrichtung jedoch der Eindruck virtueller Realität beim Benutzer verstärkt werden, ohne dabei seine Sicherheit zu gefährden.

Die Stützfläche kann beispielsweise an einer vorzugsweise relativ groß bemessenen Standplatte der Stützeinheit der Lagervorrichtung vorgesehen sein. Es ist jedoch auch möglich, lediglich zwei relativ klein bemessene Abstellflächen für die beiden Füße des Benutzers vorzusehen, die an einem gemeinsamen Verbindungsrohr oder dergleichen angeordnet sind. Das Vorsehen einer relativ groß bemessenen Stützfläche ist insofern vorteilhaft, als man sich auf diese auch setzen bzw. knien kann.

Das von der Standplatte, der Abstellflächen-Verbindungsrohr-Einheit oder dergleichen gebildete Stützteil kann mit einem zwischen Basisteil und Stützteil angeordneten Zwischenteil kippfest, jedoch relativ zu diesem verdrehbar verbunden sein. Dabei ist das Zwischenteil vorzugsweise mit dem Basisteil drehfest verbunden.

Die Stützeinheit kann mit dem Basisteil mittels eines Kugelgelenks kippbar und um die im wesentlichen vertikale Achse drehbar gelagert sein. Dabei kann das Kugelgelenk an einem Rohrabschnitt vorgesehen sein, der an einem am Basisteil befestigten weiteren Rohrabschnitt teleskopisch geführt ist. Auf diese Weise können die vier erfindungsgemäß erfaßbaren Bewegungsfreiheitsgrade mit einer einfachen und doch mechanisch robusten Konstruktion realisiert werden.

Die Sensoreinrichtung kann allein schon dadurch vor unbeabsichtigter Beschädigung geschützt werden, daß sie zumindest teilweise in einem von dem Rohrabschnitt, dem weiteren Rohrabschnitt und dem Basisteil begrenzten Aufnahmeraum angeordnet ist. Zum Schutz der Sensoreinrichtung kann ferner vorgesehen sein, daß die Sensoreinrichtung in einem Schutzgehäuse angeordnet ist, welches derart ausgebildet und dimensioniert ist, daß es vor einer übermäßigen Verformung der Sensoreinrichtung an dem Rohrabschnitt oder/und dem weiteren Rchrabschnitt anschlägt. Desweiteren ist dabei von Vorteil, daß die Sensoreinrichtung in der Verlängerung der Drehachse angeordnet ist, so daß eine Drehbewegung des Benutzers unverfälscht, d.h. auch als Verdrehung der Sensoreinrichtung, erfaßt werden kann, was die nachfolgende Interpretation der Erfassungssignale erleichtert.

Die Sensoreinrichtung kann beispielsweise in der Art aufgebaut und an dem CYBERSURFER angeordnet sein, daß ein erster Teil der Sensoreinrichtung an dem Basisteil befestigt ist und ein zweiter Teil der Sensoreinrichtung mit einem Stützeinheit-festen Teil des Kugelgelenks kipp- und drehfest verbunden, sowie bei einer Nach-unten-Bewegung des Stützeinheit-festen Teils des Kugelgelenks relativ zum zweiten Teil der Sensoreinrichtung mit diesem in Mitnahmeeingriff bringbar ist. Grundsätzlich kann jede geeignete Art von Sensoreinrichtung bei dem erfindungsgemäßen CYBERSURFER eingesetzt werden, beispielsweise Potentiometer, Dehnungsstreifen oder dergleichen umfassende Sensoreinrichtungen. Im Hinblick auf die geringe Verschleißanfälligkeit wird jedoch erfindungsgemäß vorgeschlagen, daß wenigstens eine der Sensoreinrichtungen eine optoelektronische Sensoreinrichtung ist, wie sie beispielsweise in der SPACE MOUSE (Marke) zum Einsatz kommt.

Um dem Benutzer auf dem CYBERSURFER das Halten der Balance erleichtern zu können und darüber hinaus den maximalen Kippwinkel der Stützplatte auf einen relativ kleinen Wert von beispielsweise 10° bis 15° begrenzen zu können, wird vorgeschlagen, daß eine Rückstellvorrichtung vorgesehen ist, welche einem Verkippen der Stützfläche entgegenwirkt. Diese Rückstellvorrichtung kann kostengünstig bereitgestellt werden, wenn sie wenigstens ein komprimierbares Element, vorzugsweise wenigstens ein mit einem komprimierbaren Medium gefülltes Element, beispielsweise einen Druckschlauch, umfaßt. Das komprimierbare Element kann beispielsweise an dem Zwischenteil angreifen.

Auch hinsichtlich der Drehlagerung kann es vorteilhaft sein, wenn eine Rückstellvorrichtung vorgesehen ist, welche einem Jerdrehen der Stützfläche entgegenwirkt, wobei diese Rückstellvorrichtung in einfacher und kostengünstiger Weise dadurch bereitgestellt werden kann, daß sie wenigstens ein elastisches, vorzugsweise gummi- oder federelastisches Element umfaßt, das einenends an der Stützplatte und andernends an dem Zwischenteil angelenkt ist.

Die Dreh-Rückstellvorrichtung sorgt bei einer Drehauslenkung der Stützfläche infolge einer Drehung des Oberkörpers des Benutzers relativ zu dessen Beinen, also einer Bewegung, wie man sie beispielsweise dann ausführt, wenn man seine Gehrichtung ändern will, dafür, daß die Stützfläche und somit auch der Körper des Benutzers wieder in eine Drehausgangslage zurückgeführt wird. Damit diese Rückführbewegung nicht zu schnell und vorzugsweise für den Benutzer nicht oder kaum merklich erfolgt, kann der Drehlagerung zusätzlich eine Reib- oder Dämpfungsvorrichtung zugeordnet sein.

Diese Rückführung in die Drehausgangslage ist auch im Hinblick auf die Sicherheit des auf dem CYBERSURFER stehenden Benutzers von Bedeutung, da dieser sich stets sicher sein kann, daß er im realen Raum im wesentlichen die gleiche Relativorientierung beibehält. Sind beispielsweise neben dem Benutzer Griffstangen oder dergleichen angeordnet, so weiß der Benutzer, daß er dann, wenn er zufällig das Gleichgewicht verliert, lediglich neben sich zu greifen braucht, um mit Hilfe der Griffstangen sein Gleichgewicht wieder herstellen zu können. Er kann sich also sicher sein, daß sich die Griffstangen neben ihm und nicht etwa vor und hinter ihm befinden.

Ferner kann, insbesondere für den Fall, daß auch die Richtung einer Vertikalbewegung des Benutzers erfaßt werden sQll, eine Vertikal-Rückstellvorrichtung vorgesehen sein, welche einer Vertikalbewegung der Stützfläche entgegenwirkt. Diese kann beispielsweise wenigstens ein komprimierbares Element umfassen. Verwendet man wenigstens ein mit einem komprimierbaren Medium gefülltes Element, beispielsweise einen Druckluftschlauch, so kann dieser gleichzeitig die Kipp- und die Vertikalrückstellung übernehmen. Ist man lediglich an der Erfassung des Betrags einer Vertikalbewegung des Benutzers interessiert, so kann die Rückstellung nach erfolgter Entlastung der Stützfläche durch das Gewicht des Benutzers selbst erfolgen.

Um zu ermöglichen, daß der erfindungsgemäße CYBERSURFER sowohl an die Benutzung durch ein Kind als auch an die Benutzung durch einen Erwachsenen angepaßt werden kann, wird vorgeschlagen, daß die Rückstellkraft wenigstens einer der Rückstellvorrichtungen veränderbar ist. Da ein Kind üblicherweise erheblich geringere Kräfte bzw. Drehmomente auf die Stützfläche des CYBERSURFERs ausüben kann, sollten die Rückstellkräfte bei der Benutzung des CYBERSURFERs durch ein Kind entsprechend reduziert werden können.

Umfaßt die Rückstellvorrichtung ein mit einem komprimierbaren Medium gefülltes Element, beispielsweise einen gasgefüllten Schlauch, so kann durch Anheben bzw. Absenken des Gasdrucks in dem Schlauch die Rückstellkraft erhöht bzw. erniedrigt werden. Umfaßt die Rückstellvorrichtung hingegen elastische Elemente, beispielsweise Schraubenzugfedern, so kann die Veränderbarkeit der Rückstellkraft dadurch bereitgestellt werden, daß eine der Anlenkstellen des wenigstens einen elastischen Elements an einem auf einer Schraubspindel verstellbaren Schlitten ausgebildet ist, wobei die Schraubspindel an dem jeweiligen Element, Stützfläche oder Lagerteil, drehbar gehalten ist.

Um dem Benutzer eine relativ stabile Ausgangslage der Stützfläche bieten zu können, aus der die Stützfläche nicht bei jeder geringfügigen Gewichtsverlagerung des Benutzers ausgelenkt wird (mit entsprechender Folge für die Bewegung des virtuellen Körpers im virtuellen Raum), wird vorgeschlagen, daß eine Rastvorrichtung vorgesehen ist, welche erst bei Ausübung eines ein vorbestimmtes Kippmoment übersteigenden Kippmoments auf die Stützfläche ein Verkippen dieser Stützfläche aus einer Ausgangslage zuläßt. Auch dem Drehlager kann eine Rastvorrichtung zugeordnet sein, die erst bei Ausübung eines ein vorbestimmtes Drehmoment übersteigenden Drehmoments auf die Stützfläche ein Verdrehen dieser Stützfläche zuläßt. Schließlich ist es von Vorteil, auch eine eine Vertikal-Rastvorrichtung vorzusehen, die erst bei Ausübung eines einen vorbestimmten Impuls übersteigenden Impulses auf die Stützfläche eine Vertikalbewegung dieser Stützfläche zuläßt.

Wenigstens eine der vorstehend genannten Rastvorrichtungen kann einen Raststift an der Stützeinheit oder dem Basisteil, sowie eine zugehörige Rastvertiefung an Basisteil oder Stützeinheit umfassen, wobei der Raststift in die Rastvertiefung vorzugsweise federvorgespannt ist. Wenn wenigstens drei Raststifte vorgesehen sind, welche jeweils mit einer sich in im wesentlichen vertikaler Richtung über eine vorbestimmte Länge erstreckenden Rastvertiefung oder mit einem Rastpunkt zusammenwirken. So können diese sowohl die Kipp-Verrastung als auch auch die Dreh-Verrastung und im Falle von Rastpunkten anstelle länglicher Rastvertiefungen sogar auch die Vertikal-Verrastung übernehmen. Selbstverständlich kann vorgesehen sein, daß die Vorspannkraft der Verrastung einstellbar ist.

Sowohl im Hinblick auf die Sicherheit des Benutzers als auch im Hinblick auf einen Schutz des CYBERSURFERs, und insbesondere dessen Sensoreinrichtung, vor Beschädigung wird in Weiterbildung der Erfindung vorgeschlagen, daß eine Kippwinkel-Begrenzungsvorrichtung oder/und eine Drehwinkel-Begrenzungsvorrichtung oder/und eine Vertikalbewegungs-Begrenzungsvorrichtung vorgesehen ist, wobei jede dieser Begrenzungsvorrichtungen wenigstens eine Anschlagfläche und wenigstens eine zugehörige Gegenanschlagfläche umfaßt.

Ferner wird vorgeschlagen, daß die Ausgangslage der Lagervorrichtung relativ zum Untergrund veränderbar bzw. einstellbar ist. Hierdurch kann beispielsweise verhindert werden, daß ein auf der Lagervorrichtung stehender Benutzer bei einem Verkippen der Stützfläche, wie es zur Herbeiführung einer Vorwärtsbewegung mit einer angenehmen Geschwindigkeit im virtuellen Raum erforderlich ist, nicht das Gefühl bekommt, er würde eine Schräge nach unten gehen.

Um die Standfestigkeit des Benutzers auf der Stützfläche insbesondere im Hinblick auf dessen Sicherheit erhöhen zu können, wird vorgeschlagen, daß die Stützfläche eine rutschfeste Oberflächenbeschichtung aufweist. Zusätzlich oder alternativ kann auf der Stützfläche wenigstens eine Halteschlaufe bzw. Bindung für einen Fuß des Benutzers vorgesehen sein.

Für bestimmte Anwendungen kann es von Vorteil sein, wenn der erfindungsgemäße CYBERSURFER wenigstens einen Anschluß für eine weitere Vorrichtung zur Erfassung von Bewegungen des Benutzers, bspw. für einen Cyber-Handschuh, oder/und wenigstens einen Anschluß für ein visuelles oder/und akustisches Ausgabegerät aufweist. Als visuelle Ausgabegeräte kommen neben einem Cyber-Helm auch Monitore und Projektionsvorrichtungen, beispielsweise großflächige Laserprojektoren, in Betracht. Beide gemeinsam oder alternativ einsetzbaren Merkmalsgruppen tragen zur Erhöhung des Eindrucks virtueller Realität bei.

Im Hinblick auf eine möglichst universelle Einsetzbarkeit des erfindungsgemäßen CYBERSURFERs wird ferner vorgeschlagen, daß wenigstens einem der Anschlüsse eine standardisierte Schnittstelle für eine Datenverarbeitungsanlage zugeordnet ist, bspw. eine standardisierte serielle oder parallele Schnittstelle, wobei hierunter auch ein standardisierter, sogenannter Game-Port verstanden wird.

Nach einem weiteren Gesichtspunkt betrifft die Erfindung ein Verfahren zur Steuerung der Bewegung eines in einer Datenverarbeitungsanlage virtuell vorhandenen Körpers in einem entsprechend virtuellen Raum auf Grundlage der von einer erfindungsgemäßen Vorrichtung erfaßten Bewegungszustände des realen Körpers eines Benutzers, wobei bei dem erfindungsgemäßen Verfahren verschiedene Bewegungsparameter des virtuellen Körpers auf Grundlage der erfaßten Sensorsignale gesteuert werden.

Diese Sensorsignale bzw. die ihnen zugrunde liegenden Bewegungen/Bewegungszustände des realen Körpers des Benutzers im realen Raum können in verschiedener Art und Weise zur Steuerung der Bewegung des Körpers im virtuellen Raum eingesetzt werden:

Beispielsweise kann die Richtung einer translatorischen Bewegung des virtuellen Körpers auf Grundlage der erfaßten Richtung einer Schwerpunktsverlagerung des realen Körpers des Benutzers gesteuert werden und die Geschwindigkeit einer translatorischen Bewegung des virtuellen Körpers auf Grundlage des Betrags der Schwerpunktsverlagerung des realen Körpers des Benutzers gesteuert werden. Bei dieser Interpretation der Sensorsignale wird die Verlagerung des Körpergewichts somit ausschließlich zur Steuerung einer rein translatorischen Bewegung des Körpers im virtuellen Raum genutzt.

Alternativ kann der Kurvenradius einer Kreisbewegung des virtuellen Körpers auf Grundlage der erfaßten Richtung einer Schwerpunktsverlagerung des realen Körpers des Benutzers gesteuert werden und die Geschwindigkeit der Bewegung des virtuellen Körpers auf Grundlage des Betrags der Schwerpunktsverlagerung des realen Körpers des Benutzers gesteuert werden.

Diese Art der Interpretation kann beispielsweise zur Simulation eines Motorradrennens oder dergleichen eingesetzt werden.

Anstelle der Steuerung der Geschwindigkeit auf Grundlage des Betrags der Schwerpunktsverlagerung könnte alternativ auch die Beschleunigung der Bewegung des virtuellen Körpers auf Grundlage des Betrags der Schwerpunktverlagerung des realen Körpers des Benutzers gesteuert werden.

Gemäß einer "1:1"-Interpretation kann die Richtung einer Kippbewegung des virtuellen Körpers auf Grundlage der erfaßten Richtung einer Schwerpunktsverlagerung des realen Körpers des Benutzers gesteuert werden und der Betrag der Kippbewegung des virtuellen Körpers auf Grundlage des Betrags der Schwerpunktsverlagerung des realen Körpers des Benutzers gesteuert werden. Diese Interpretation ist beispielsweise bei der Simulation des Wellenreitens bzw. Surfens von Vorteil. Den vorstehend bereits angesprochenen Sicherheits-Griffstangen kann bei dieser Interpretation der Sensorsignale noch eine weitere Funktion zukommen. Bei der Simulation des Windsurfens kann der Benutzer nämlich die Greifstange als Simulation des Trapezes des Windsurfsegels erfassen. Bei der Simulation des Wellenreitens, Snowboard-Fahrens oder dergleichen kann sich der Benutzer mit Hilfe der Greifstange in eine Schräglage begeben, wie sie in der Realität zum Ausgleich der auftretenden dynamischen Kräfte erforderlich wäre.

Gemäß einer weiteren Interpretation kann die Geschwindigkeit bzw. die Beschleunigung einer Bewegung des virtuellen Körpers auf Grundlage des Betrags einer aus Richtung und Betrag der Schwerpunktsverlagerung bestimmten Vorwärtsverlagerung des realen Körpers des Benutzers gesteuert werden und der Kurvenradius einer Kreisbewegung des virtuellen Körpers auf Grundlage des Betrags einer aus Richtung und Betrag der Schwerpunktsverlagerung bestimmten seitlichen Verlagerung des realen Körpers des Benutzers gesteuert werden.

Ferner ist es möglich, eine Drehung des virtuellen Körpers um dessen Querachse auf Grundlage des Betrags einer aus Richtung und Betrag der Schwerpunktsverlagerung bestimmten Vorwärtsverlagerung des realen Körpers des Benutzers zu steuern und eine Drehung des virtuellen Körpers um dessen Längsachse oder/und Hochachse auf Grundlage des Betrags einer aus Richtung und Betrag der Schwerpunktsverlagerung bestimmten seitlichen Verlagerung des realen Körpers des Benutzers zu steuern.

Zu den vorstehend angeführten verschiedenen Interpretationsmöglichkeiten für die aus einer Verlagerung des Körpergewichts des Benutzers resultierenden Bewegung der Stützfläche kann hinzutreten, daß Richtung und Betrag einer Drehung des virtuellen Körpers um dessen Hochachse auf Grundlage der erfaßten Richtung bzw. des erfaßten Betrags einer Drehbewegung des realen Körpers des Benutzers gesteuert werden oder/und daß Richtung und Betrag einer Bewegung des virtuellen Körpers in Richtung dessen Hochachse auf Grundlage der erfaßten Richtung bzw. des erfaßten Betrags des Impulsübertrages infolge einer Vertikalbewegung des realen Körpers des Benutzers gesteuert werden.

Obgleich die erfindungsgemäße Vorrichtung und das erfindungsgemäße Verfahren vorstehend anhand der Steuerung der Fortbewegung des virtuellen Körpers des Benutzers in dem virtuellen Raum erläutert worden ist, versteht es sich, daß der virtuelle Körper auch ein beliebiges anderes virtuelles Objekt sein kann, beispielsweise ein mittels eines CAD-Programms konstruierter Gegenstand, dessen Lage man in dem virtuellen Raum verändern möchte.

Die Erfindung wird im folgenden an einem Ausführungsbeispiel anhand der beigefügten Zeichnung näher erläutert werden. Es stellt dar:
- Figur 1: eine Schnittansicht des erfindungsgemäßen CYBERSURFERs;
- Figur 2: eine Draufsicht auf die Zwischenplatte bei abgenommener Stützplatte gemäß der Linie II - II in Figur 1 ;
- Figur 3: eine vergrößerte Darstellung des Details III in Figur 1;
- Figur 4: eine Ansicht ähnlich Figur 3 der Lager-/Sensor-Einheit einer abgewandelten Ausführungsform; und
- Figur 5: eine vergrößerte Darstellung des Randbereichs der Basiswanne des erfindungsgemäßen CYBERSURFERs zur Erläuterung alternativer Verrastungs- und Bewegungsbegrenzungsvorrichtungen.

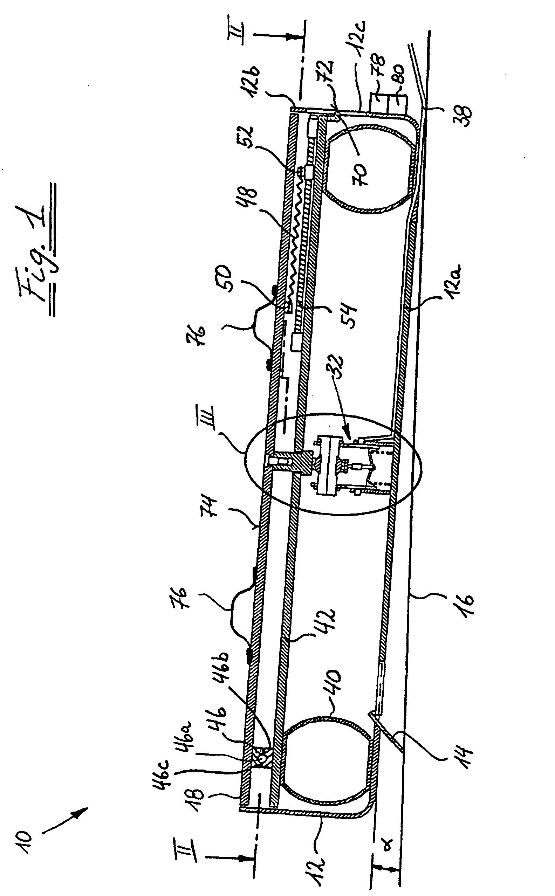

Die erfindungsgemäße Vorrichtung zum Erfassen bestimmter Bewegungszustände des Körpers eines Benutzers ist in Figur 1 ganz allgemein mit 10 bezeichnet. Sie umfaßt eine Basiswanne 12 mit einer Basisplatte 12a und einem an die Basisplatte 12a anschließenden Umfangsrand. Mittels eines ausklappbaren bzw. in der Darstellung gemäß Figur 1 ausgeklappten Fußes 14 steht die Vorrichtung 10 (im folgenden auch kurz: CYBERSURFER 10) auf dem Untergrund 16, beispielsweise einem Zimmerboden, auf. In der Basiswanne 12 ist eine Standplatte 18 gelagert.

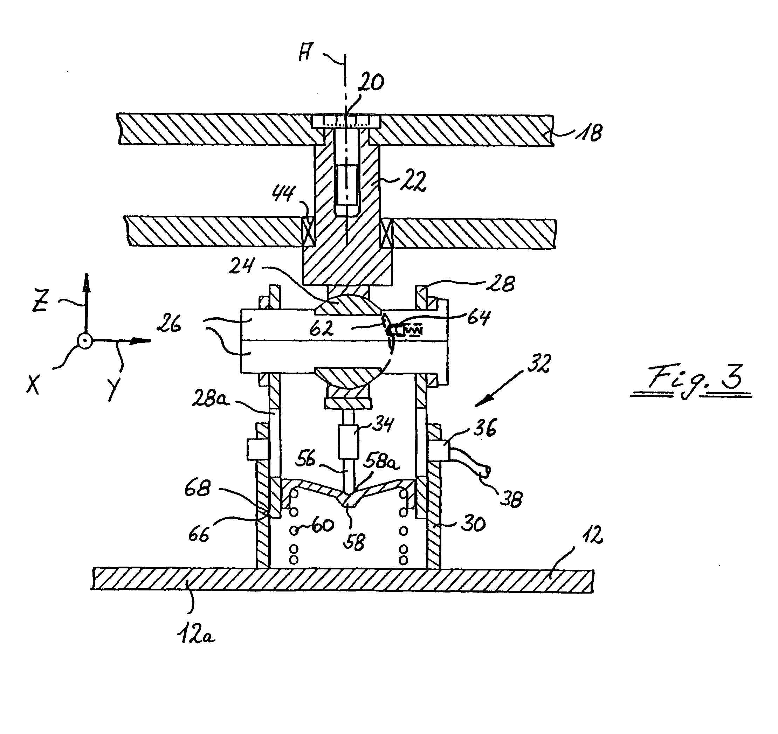

An der Standplatte 18 ist beispielsweise mittels eines Schraubbolzens 20 (siehe Figur 3) ein Lagerzapfen 22 befestigt, an dessen freiem Ende eine Gelenkkugel 24 angeordnet ist. Die Gelenkkugel 24 ist in einer von zwei Lagerschalenhälften 26 gebildeten Lagerschale aufgenommen. Die beiden Lagerschalenhälften sind fest miteinander und mit einem Rohrabschnitt 28 verbunden, der in einem auf der Basisplatte 12 befestigten weiteren Rohrabschnitt 30 teleskopisch geführt ist.

Durch die vorstehend erläuterte Lagerung kann die Standplatte 18 bezüglich der Basisplatte bzw. Basiswanne 12 um zwei (unter Vernachlässigung vom Standfuß 14 herrührenden Neigungswinkels α) im wesentlichen horizontal und zueinander orthogonal verlaufende Raumrichtungen X und Y verkippt, um eine zu den beiden Raumrichtungen X und Y orthogonale, im wesentlichen vertikal verlaufende Raumachse Z gedreht und in Richtung der Raumachse Z translatorisch bewegt werden.

Die vorstehend genannten Bewegungen der Standplatte 18 werden mittels einer optoelektronischen Sensoreinheit 32 erfaßt, die eine mit der Gelenkkugel 24 verbundene Lichtquelle 34 und eine Mehrzahl am Umfang des Rohrabschnitts 30 angeordneter Fotodetektoren 36 umfaßt. Damit das Licht von der Lichtquelle 34 zu den Fotodetektoren 36 gelangen kann, sind im Umfang des Rohrabschnitts 28, der in dem Rohrabschnitt 30 teleskopisch, aber um die Vertikalachse Z unverdrehbar geführt ist, an den Fotosensoren 36 entsprechenden Stellen Öffnungen 28a vorgesehen. Die Lichtquelle 34 sendet eine Mehrzahl von Lichtstrahlen vorbestimmter Charakteristik aus, die von den Fotodetektoren 36 erfaßt werden.

Unter dem Begriff "Lichtquelle" sei hierbei auch eine Reflektor- oder Streuanordnung verstanden, die das von einer primären externen Lichtquelle eingestrahlte Licht als sekundäre Lichtquelle ablenkt und zu den Fotosensoren 36 leitet. Ferner ist der Begriff "Licht" nicht als im optischen Sinne einschränkend zu verstehen; es können auch für das menschliche Auge unsichtbare, elektromagnetische Wellen verwendet werden, beispielsweise Infrarotstrahlung.

Die von den Fotosensoren 36 erfaßten, den Bewegungszustand der Standplatte 18 relativ zur Basiswanne 12 entsprechenden Sensorsignale werden über eine Signalleitung 38 an eine nicht dargestellte Datenverarbeitungsanlage weitergeleitet. Die optoelektronische Sensoreinrichtung 32 kann beispielsweise eine ähnliche Sensorik umfassen, wie sie in der SPACE MOUSE (Marke) zum Einsatz kommt.

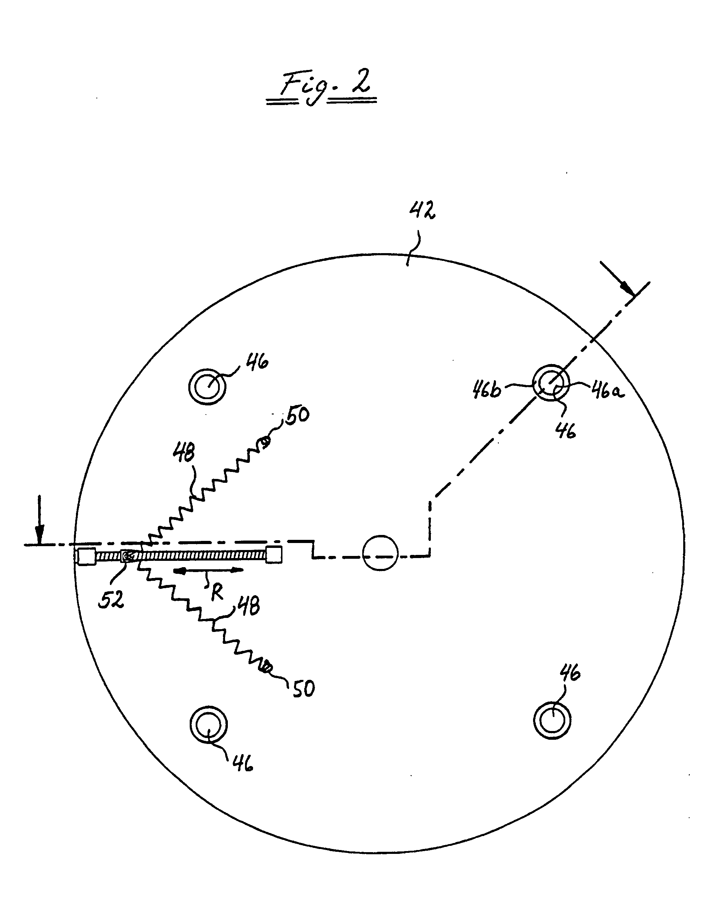

Der erfindungsgemäße CYBERSURFER 10 umfaßt ferner Rückstellvorrichtungen, die einer Auslenkung der Standplatte 18 gemäß einem der vorstehend erläuterten Bewegungsfreiheitsgrade aus der in Figur 1 dargestellten Ausgangslage entgegenwirken. So ist gemäß Figur 1 beispielsweise ein mit Druckluft gefüllter Schlauch 40 vorgesehen, der sowohl einer Kippbewegung der Standplatte 18 um das Kugelgelenk 24/26 als auch einer Einwärtsbewegung der Standplatte 18 in Vertikalrichtung Z in die Basiswanne 12 hinein entgegenwirkt. Der Schlauch 40 stützt sich zum einen an der Basiswanne 12 und zum anderen an einer Zwischenplatte 42 ab, die über ein Drehlarer 44 des Lagerzapfens 22 und Kugellager 46 (siehe auch Figur 2) kippfest mit der Standplatte 18, jedoch relativ zu dieser um die Achse des Lagerzapfens 22 verdrehbar gehalten ist. Die Kugellager 46 umfassen Lagerkugeln 46a, die aufseiten der Zwischenplatte 42 in Lagerpfannen 46b gehalten und aufseiten der Standplatte 18 in Laufbahnen 46c geführt sind, wobei sich die Laufbahnen, bezogen auf die Achse A des Lagerzapfens 22, über einen Winkel von etwa 10° bis 15° erstrecken.

Als Rückstelleinrichtung, die sich einer Verdrehung der Standplatte 18 um die Achse A des Lagerzapfens 22 entgegensetzt, sind elastische Elemente 48, beispielsweise Gummibänder oder Schraubenzugfedern, vorgesehen, die einenends bei 50 an der Standplatte 18 und andernends an einem Schlitten 52 angelenkt sind, der auf einer mit der Zwischenplatte 42 verbundenen Schraubspindel 54 in Radialrichtung R (siehe Figur 2) verstellbar geführt ist. Die Schraubspindel 54 kann durch eine in einer Seitenwandung 12b der Basiswanne 12 vorgesehene Öffnung 12c mittels eines nicht dargestellten Werkzeugs gedreht werden, um so die Vorspannung der elastischen Elemente 48 und entsprechend deren Rückstellkraft auf die Standplatte 18 zu verändern.

Ferner ist für jeden der vorstehend erläuterten Bewegungsfreiheitsgrade der Standplatte 18 eine Rastvorrichtung vorgesehen, die zum Erzielen einer tatsächlichen Auslenkung der Standplatte aus der Ausgangslage gemäß Figur 1 die Überwindung eines gewissen Anfangswiderstands erforderlich macht.

Die sich einem Verkippen anfänglich widersetzende Rastvorrichtung umfaßt einen mit der Lagerkugel 24 verbundenen Raststift 56 (siehe Figur 3), der in der Ausgangslage gemäß Figur 1 bzw. Figur 3 in die Rastausnehmung 58a eines Gegenelements 58 eingreift. Das Gegenelement 58 ist in der Umgebung der Rastausnehmung 58a trichterförmig ausgebildet, an seinem äußeren Umfangsrand in dem Rohrabschnitt 28 geführt und durch eine sich an der Basisplatte 12a abstützende Feder 60 gegen den Raststift 56 vorgespannt. Aufgrund der Federvorspannung wird der Raststift 56 bei unbelasteter Stützfläche 74 selbsttätig in die Rastvertiefung 58a zurückgeführt. Die Federvorspannung sorgt auch dann, wenn_die Rückstellvorrichtung bei unbelasteter Stützfläche 74 noch eine geringe Auslenkung des Raststifts 56 aus der Rastvertiefung 58a zulassen würde, sicher für die Rückkehr des Raststifts 56 in die Rastvertiefung 58a.

Die sich einer Drehbewegung der Standplatte 18 um die Achse A des Lagerzapfens 22 widersetzende Rastvorrichtung umfaßt eine in der Lagerkugel 24 ausgebildete Rastnut 62 und einen in einer der Lagerschalenhälften 26 geführten federvorgespannten Rastkörper 64. Anzumerken ist, daß die Rastausnehmung 62 nicht einfach als dem Eingriffsabschnitt des Rastkörpers 64 komplementär ausgebildete Vertiefung vorgesehen ist, sondern als längliche Rastnut, die ein Verkippen der Standplatte 18 ohne damit einhergehendes Ausrasten des Rastkörpers 64 aus der Rastnut 62 zuläßt.

Die sich einer Höhenverstellung der Lagerplatte 18 anfänglich widersetzende Rastvorrichtung umfaßt eine dem Rohrabschnitt 28 zugeordnete Rastnase 66, die in eine im Rohrabschnitt 30 ausgebildete Rastkerbe 68 eingreift. Sollte die Flexibilität der Materialien, aus denen die Rohrabschnitte 28, 30 gebildet sind, nicht ausreichen, so kann die Rastnase 66 an dem Rohrabschnitt 28 auch federvorgespannt angeordnet sein.

Gemäß Figur 1 ist an der Zwischenplatte 42 ein Anzeigeelement 70 angeordnet, das durch die längliche Öffnung 12c der Seitenwandung 12b der Basiswanne 12 sichtbar ist. Im Bereich des Randes der Öffnung 12c ist eine Markierung 72 vorgesehen, die als einfacher Strich oder als mehrere Striche umfassende Skala ausgebildet sein kann. Diese Anzeigeeinrichtung 70/72 soll die Anpassung des CYBERSURFERs 10 an das jeweilige Gewicht des Benutzers durch Aufpumpen des Schlauchs 40 bzw. Ablassen von Luft aus dem Schlauch 40 erleichtern. Bei Übereinstimmung des Anzeigeelements 70 und der Markierung 72 kann der Benutzer davon ausgehen, daß u.a. auch die Rastvorrichtung 66/68 sich in der gewünschten Stellung befindet.

Die Standfläche 74 der Standplatte 18 ist mit einer rutschfesten Oberflächenbeschichtung oder/und rutschfesten Oberflächenstruktur versehen. Ferner sind auf der Standplatte 18 Schlaufen 76 für die Füße des Benutzers vorgesehen.

Grobschematisch sind in Figur 1 ferner ein Anschluß 78 für ein weiteres Eingabegerät, beispielsweise einen Joystick, einen Cyber-Handschuh oder dergleichen, vorgesehen sowie ein Anschluß 80 für ein Gerät zur visuellen und/oder akustischen Anzeige von Daten, beispielsweise ein Cyber-Helm. Die visuelle/akustische Anzeige kann jedoch ebenso über ein direkt mit der Datenverarbeitungsanlage verbundenes, herkömmliches Datensichtgerät erfolgen.

Nachzutragen ist noch, daß der ausklappbare Standfuß 14 dazu bestimmt ist, den CYBERSURFER 10 derart zu neigen, daß der Benutzer bei einem Verkippen der Standplatte 18, wie es zur Herbeiführung einer Vorwärtsbewegung mit einer angenehmen Geschwindigkeit im virtuellen Raum erforderlich ist, nicht das Gefühl bekommt, er würde eine Schräge nach unten gehen.

Nachzutragen ist ferner, daß zur Sicherung des Benutzers anstelle der Griffstangen auch eine um den Benutzer herum angeordnete Reling, ein Käfig oder dergleichen vorgesehen sein können.

Nachzutragen ist ferner, daß die Datenübertragung zwischen dem erfindungsgemäßen Gerät und der Datenverarbeitungsanlage auch über eine, beispielsweise Infrarotsignale einsetzende, berührungsfreie Datenübermittlungsstrecke erfolgen kann.

Anstelle einer Lagervorrichtung mit einer kippbaren oder/und vertikal bewegbaren oder/und drehbaren Standplatte könnte auch eine mit einer Mehrzahl von Drucksensoren bestückte Standplatte eingesetzt werden, wobei die vom Benutzer ausgeführten Bewegungen durch geeignete Korrelation der Meßsignale dieser Drucksensoren bestimmt werden.

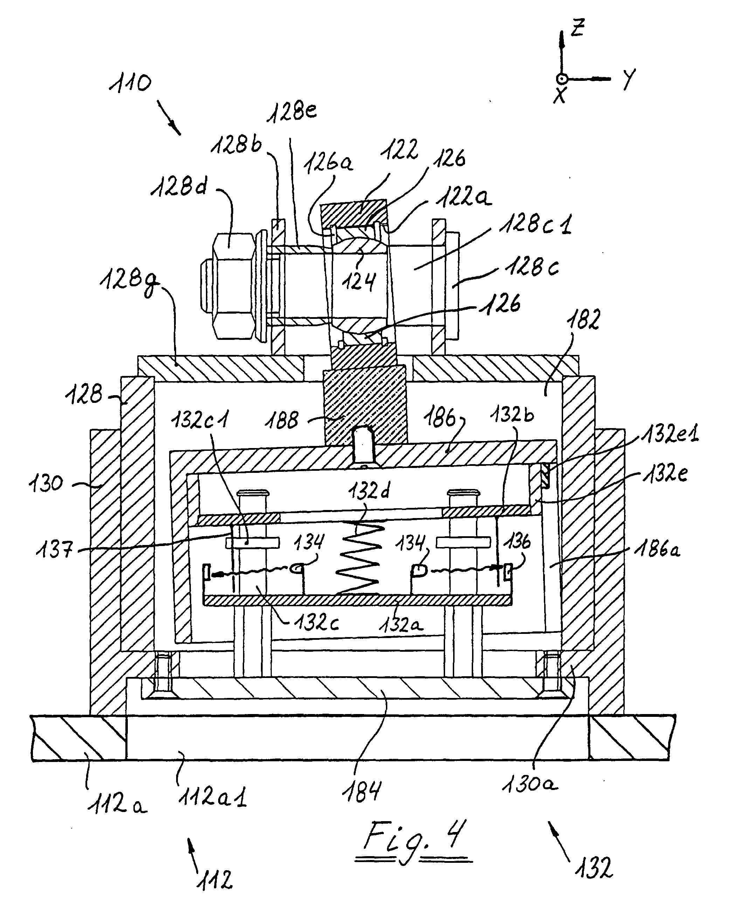

In Figur 4 ist die Lager- und Sensor-Baugruppe einer alternativen Ausführungsform des erfindungsgemäßen CYBERSURFERs in einer Figur 3 analogen Darstellung gezeigt. Die Lager-Sensor-Baugruppe gemäß Figur 4 entspricht im wesentlichen jener gemäß Figur 3. Daher sind in Figur 4 analoge Teile mit den gleichen Bezugszeichen versehen wie in Figur 3, jedoch vermehrt um die Zahl 100. Darüber hinaus wird die Lager-Sensor-Baugruppe gemäß Figur im folgenden nur insoweit beschrieben werden, als sie sich von jener gemäß Figur 3 unterscheidet.

Bei der Ausführungsform gemäß Figur 4 weist der Lagerzapfen 122 an seinem unteren Ende eine Bohrung 122a auf, in welcher zwei Kugellagerschalenhälften 126 aufgenommen und dort mittels Sprengringen 126a gehalten sind. An einem Deckelabschnitt 128g des Rohrabschnitts 128 sind zwei Halterungsansätze 128b angeordnet, an welchen ein Schraubbolzen 128c mittels einer Mutter 128d befestigt ist. Der Bolzen 128c durchsetzt eine Bohrung der Gelenkkugel 124, welche mit ihrem in Figur 4 rechten Ende sich an einem Kragen 128c1 des Halterungsbolzens 128c abstützt, und an ihrem in Figur 4 linken Ende mit einer Spannhülse 128e in Eingriff ist, welche durch die Mutter 128d in Eingriff mit der Lagerkugel 124 gespannt ist. Auf diese Weise kann mit fertigungstechnisch einfach herstellbaren und somit kostengünstig erhältlichen Teilen ein konstruktiv einfaches und doch robustes Kugelgelenk zur Lagerung der Stützeinheit bereitgestellt werden.

Der Rohrabschnitt 128 ist in einem auf der Basisplatte 112a befestigten weiteren Rohrabschnitt 130 in Vertikalrichtung Z teleskopierbar verschieblich gelagert und steht in der in Figur 4 dargestellten Stellung, welche der bevorzugten Ausgangsstellung des erfindungsgemäßen CYBERSURFERs 110 entspricht, auf einem radial inneren Ringansatz 130a des weiteren Rohrabschnitts 130 auf. Die Basisplatte 112a, die Rohransätze 130 und 128 sowie der Deckel 128g des Rohransatzes 128 bilden zusammen einen Aufnahmeraum 182 für die Sensoreinheit 132, welcher durch eine Öffnung 112a1 der Basisplatte 112a zugänglich ist.

Die nach Art der vorstehend bereits mehrfach angesprochenen SPACE-MOUSE (Marke) ausgebildete Sensoreinheit 132 umfaßt eine über eine Stützanordnung 184 am Ringansatz 130a und somit an der Basisplatte 112a befestigte ortsfeste Platte 132a und eine relativ zu dieser bewegliche Platte 132b. An der festen Platte 132a ist eine Mehrzahl von Lichtquellen 134 sowie eine Mehrzahl von Fotodetektoren 136 angebracht, und an der beweglichen Platte 132b ist eine Mehrzahl von Blendenelementen 137 jeweils zwischen einer Lichtquelle 134 und einem Fotodetektor 136 angeordnet. Die bewegliche Platte 132b ist bezüglich der festen Platte 132a durch Führungselemente 132c geführt. Der Minimalabstand zwischen den beiden Platten 132a und 132b wird durch Anschlagsansätze 132c1 der Führungskörper 132c sichergestellt. Darüber hinaus sind die bewegliche Platte 132b und die feste Platte 132a über Federn 132d miteinander verbunden, welche die beiden Platten 132a und 132b in eine vorbestimmte Ausgangsstellung relativ zueinander vorspannen.

Am äußeren Umfang der beweglichen Platte 132b ist ein Rohrabschnitt 132e befestigt, der in einem topfförmigen Schutzgehäuse 186 aufgenommen ist. Das Schutzgehäuse 186 ist mit dem Lagerzapfen 122 verbunden und überträgt dessen Kipp- und Drehbewegungen auf den Rohransatz 132e. Darüber hinaus überträgt das Schutzgehäuse 186 Nach-unten-Bewegungen des Lagerzapfen 122 auf den Rohransatz 132e und somit die bewegliche Platte 132b der Sensoreinheit, jedenfalls bis zum Aufstehen des Rohransatzes 128 auf dem Ringvorsprung 130a.

Zum Schutz der Sensoreinheit 132 vor übermäßiger Annäherung der beiden Platten 132a und 132b ist die Gesamtanordnung derart bemessen, daß der Anschlag zwischen dem Rohrabschnitt 128 und dem Ringansatz 130a eintritt, bevor die bewegliche Platte 132b mit einem der Anschlagskragen 132c1 in Eingriff gelangt. Zum Schutz der Sensoreinrichtung vor übermäßiger Entfernung der beiden Platten 132a und 132b voneinander ist der Rohransatz 132e in dem Schutzgehäuse 186 in Vertikalrichtung verschiebbar gelagert, und zwar mittels Vertikalnuten 186a des Schutzgehäuses und Führungsnasen 132e1 des Rohransatzes 132e. Durch den in Figur 4 rechts angedeuteten Kontakt des Schutzgehäuses 186 mit dem Rohransatz 128 wird darüber hinaus sichergestellt, daß die Sensoreinheit 132 nicht einer übermäßigen seitlichen Verformung ausgesetzt werden kann. Als weitere diesbezügliche Sicherungsmaßnahme kann vorgesehen sein, daß das Schutzgehäuse 186 mit dem Lagerzapfen 122 über eine gummielastisches Element 188 verbunden ist, welches einer deformierenden Beschädigung der Gesamtanordnung sowohl nach einem möglichen Eingriff des Schutzgehäuses 186 mit dem Rohransatz 128 als auch infolge übermäßigen Verdrehens der beiden Platten 132a und 132b vorbeugt. Darüber hinaus ermöglicht das gummielastische Element 188 in Zusammenwirkung mit den Federn 132d eine Untersetzung der Bewegung der Stützplatte 118 in eine entsprechende Bewegung der beweglichen Platte 132b der Sensoreinheit 132.

Nachzutragen ist noch, daß die Federn 132d dann, wenn der Rohrabschnitt 128 gerade auf dem Ringansatz 130a aufsteht, etwas komprimiert sind, um bei einem Sprung des Benutzers und folglicher Nach-oben-Bewegung des Lagerzapfens 122 und des Schutzgehäuses 186 unter der Wirkung der Druckschläuche 40 die bewegliche Platte 132b von der festen Platte 132a zur Erfassung der Sprungbewegung des Benutzers entfernen zu können.

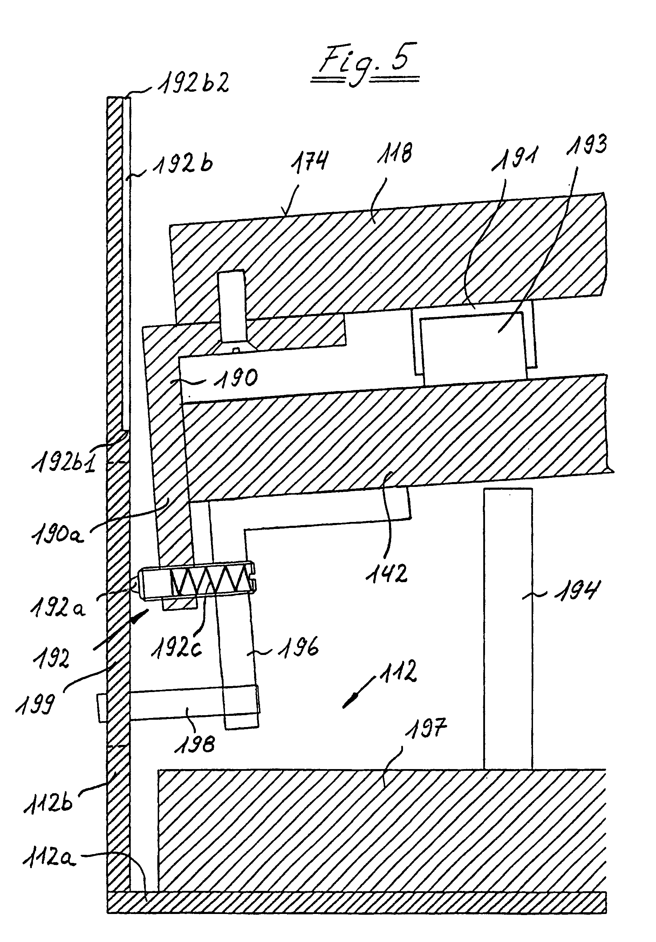

Damit sowohl Kinder als auch Erwachsene den erfindungsgemäßen CYBERSURFER ohne weiteres benutzen können, kann die Lagervorrichtung an das Gewicht des jeweiligen Benutzers angepaßt werden. Bei einer beispielhaften Ausführungsform der Erfindung kann diese Anpassung wie folgt vorgenommen werden: Man läßt aus dem Druckluftschlauch 40, auf dem die Stützeinheit 118/142 ruht, bei auf der Stützfläche 174 (siehe Fig. 5) stehendem Benutzer so lange Luft ab, bis der mit dem Kugelgelenk verbundene Rohrabschnitt 128 auf dem Ringansatz 132a aufsteht.

Um auch die Richtung einer Vertikalbewegung des Benutzers erfassen zu können, kann gemäß einer abgewandelten Ausführungsform vorgesehen sein, daß der Rohrabschnitt 128 in der Ausgangslage des CYBERSURFERs nicht auf dem Ringansatz 130a aufsteht. Um dennoch eine Anpassung an das Gewicht des jeweiligen Benutzers ermöglichen zu können, kann eine Justieranzeige vorgesehen sein, wie sie vorstehend an Hand von Figur 1 beschriben worden ist. Es wird dort auf die Justieranzeige 70 und die Justiemarkierung 72 verwiesen.

Gemäß Figur 5 ist am äußeren Umfangsrand der Standplatte 118 ein Winkelelement 190 befestigt, an dessen nach in Figur 5 nach unten ragenden Schenkel 190a ein Rastelement 192 mit einem Raststift 192a angeordnet ist. Der Raststift 192a ist, wie in Figur 5 grob schematisch angedeutet ist federvorgespannt und drückt gegen die Innenfläche des Basiswannenrands 112b. Am oberen Ende des inneren Umfangs des Wannenrands 112b ist eine zugehörige, sich im wesentlichen in vertikaler Richtung erstreckende Rastnut 192b eingebracht. Die Anordnung des Rastelements 192 am Winkel 190 sowie die Position des unteren Endes der Rastnut 192b sind derart aufeinander abgestimmt, daß bei im wesentlichen horizontaler Standplatte 118 der Raststift 192a gerade an der unteren Endkante 192b1 der Rastnut 192b anliegt. Somit muß dann, wenn die Standplatte 118 in die in Figur 5 dargestellte verkippt werden soll, der Widerstand der Vorspannfeder 192c überwunden werden, während der Raststift 192a bei einer Nach-oben-Bewegung infolge des Verkippens der Standplatte 118 im wesentlichen widerstandsfrei in der Rastnut 192b gleiten kann.

Sieht man nun über den Umfang des Wannenrand 112b verteilt wenigstens drei, vorzugsweise wenigstens vier derartige Rastvorrichtungen 192 vor, so bilden diese zusammen eine Rastvorrichtung, die die Standplatte 118 sowohl gegen Verkippen um ein im wesentliche horizontale Kippachse als auch gegen Verdrehen um die im wesentiche vertikale Achse sichert. Soll auf die Drehverrastung verzichtet werden, so müßte die Rastnut 192b wesentlich größer bemessen werden als der Abmessung des Raststifts 192 entspricht. Soll hingegen auf eine Kippverrastung verzichtet werden, so müßte das untere Ende 192b1 der Rastnut 192b erheblich näher an der Basisplatte 112a angeordnet sein. Soll die Rastvorrichtung auch bezüglich Vertikalbewegungen der Standplatte 118 wirksam sein, so müßte das obere Ende 192b2 so nahe an das untere Ende 192b1 der Rastnut 192b angenähert werden, daß die Rastnut 192b zu einem Rastpunkt entartet.

In Figur 5 ist darüber hinaus ein Anschlagelement 194 dargestellt, welches gegebenenfalls mit der Zwischenplatte 142 zusammenwirkt, um ein übermäßiges Verkippen der gesamten Stützeinheit zu verhindern. Zusätzlich oder alternativ können an der Zwischenplatte 142 Winkelelemente 196 angeordnet sein, an denen wiederum Anschlageelemente 198 befestigt sind, wobei diese Anschlagselemente 198 Öffnungen 199 im Wannenrand 112b durchsetzen und mit diesen den Kippwinkel begrenzen. Die Anschlageinrichtung 198/199 stellt darüber hinaus sicher, daß der Rohrabschnitt 132e und das Schutzgehäuse 186 bei einem Sprung des Benutzers nicht versehentlich außer Eingriff gelangen können, und daß sich das Zwischenteil 142 nicht unbeabsichtigterweise relativ zum Basisteil 112 verdreht.

Zur Bildung einer Drehwinkelbegrenzung sind an der Stützplatte 118 Anschlagelemente 191 und an der Zwischenplatte 142 mit diesen zusammenwirkenden Gegenanschlagelemente 193 vorgesehen. Auf die Tatsache, daß der Rohrabschnitt 128 und der Ringansatz 130a zusammen eine Vertikal-Begrenzungseinrichtung bilden, wurde vorstehend bereits hingewiesen. In Figur 5 ist ferner ein Gewichtsteil 197 dargestellt, welches an der Basisplatte 112a befestigt ist, um die Standfestigkeit des gesamten CYBERSURFERs 110 zu verbessern.

Nachzutragen ist noch, daß dann, wenn aufgrund einer entsprechenden Bemessung der Kippwinkelbegrenzung 194 bzw. 198/199 ein Kontakt zwischen dem Schutzgehäuse 186 und dem Rohrabschnitt 128 verhindert wird, bzw. dann, wenn die Umfangswand des Schutzgehäuses 186 aus einem flexiblen Material hergestellt ist, der Lagerzapfen 122 und das Schutzgehäuse 186 bei entsprechender Auslegung der Drehwinkelbegrenzung 191/193 über das Element 188 auch starr miteinander verbunden sein können.

Nachzutragen ist ferner, daß die Vorspannkraft der Rastfeder 192c einstellbar sein kann.

## Patentansprüche

1. Vorrichtung (10; 110) zum Erfassen bestimmter Bewegungszustände des Körpers eines Benutzers und zur Erzeugung von dem Erfassungsergebnis entsprechenden Signalen zur Weiterverarbeitung in einer Datenverarbeitungsanlage, umfassend:
- eine Lagervorrichtung (12; 112) für den Körper des Benutzers, welche eine auf einem Basisteil (12a; 112a) kippbar gelagerte Stützeinheit (18/42; 118/142) mit einer Stützfläche (74; 174) zur Abstützung des Körpers des Benutzers umfaßt, sowie
- eine Sensoreinrichtung (32; 132) zur Erfassung der Richtung und des Betrages der Position der Projektion des Körperschwerpunkts in die Stützfläche (74; 174) relativ zu einer vorbestimmten Ursprungsposition (Schnittpunkt der Achse A mit der Stützfläche 74 bzw. 174) in der Stützfläche (74; 174) aus der Richtung und dem Betrag einer Verkippung der Stützfläche (74; 174) und zur Erzeugung entsprechender Sensorsignale,
**dadurch gekennzeichnet,**
**daß** die Stützfläche (74; 174) auf dem Basisteil (12a; 112a) ferner um eine im wesentlichen vertikale Achse (A) drehbar oder/und in Richtung (Z) dieser im wesentlichen vertikalen Achse (A) bewegbar gelagert ist, und
**daß** die Sensoreinrichtung (32; 132) ferner zur Erfassung der Richtung und des Betrages einer Drehbewegung des Körpers des Benutzers um die im wesentlichen vertikale Achse (A) oder/und zur Erfassung zumindest des Betrages einer Vertikalbewegung des Körperschwerpunktes, sowie zur Erzeugung entsprechender Sensorsignale ausgebildet ist.

2. Vorrichtung nach Anspruch 1,
**dadurch gekennzeichnet, daß** die Stützeinheit (18/42; 118/142) ein die Stützfläche (74; 174) aufweisendes Stützteil (18; 118) und ein zwischen Stützteil (18; 118) und Basisteil (12a; 112a) angeordnetes Zwischenteil (42; 142) umfaßt, wobei dieses Zwischenteil (42; 142) mit dem Stützteil (18; 118) kippfest verbunden, jedoch relativ zu diesem drehbar ist; und wobei das Zwischenteil (42; 142) mit dem Basisteil (12a; 112a) vorzugsweise drehfest verbunden ist.

3. Vorrichtung nach Anspruch 1 oder 2,
**dadurch gekennzeichnet, daß** die Stützeinheit (18/42; 118/142) mit dem Basisteil (12a; 112a) mittels eines Kugelgelenks (24/26; 124/126) kippbar und um die im wesentlichen vertikale Achse (A) drehbar verbunden ist.

4. Vorrichtung nach Anspruch 3,
**dadurch gekennzeichnet, daß** das Kugelgelenk (24/26; 124/126) an einem Rohrabschnitt (28; 128) vorgesehen ist, der an einem am Basisteil (12a; 112a) befestigten weiteren Rohrabschnitt (30; 130) teleskopisch geführt ist.

5. Vorrichtung nach Anspruch 4,
**dadurch gekennzeichet,** daß die Sensoreinrichtung (32; 132) zumindest teilweise in einem von dem Rohrabschnitt (28; 128), dem weiteren Rohrabschnitt (30; 130) und dem Basisteil (12a; 112a) begrenzten Aufnahmeraum (182) angeordnet ist.

6. Vorrichtung nach Anspruch 4 oder 5,
**dadurch gekennzeichnet, daß** die Sensoreinrichtung (132) in einem Schutzgehäuse (186) angeordnet ist, welches derart ausgebildet und dimensioniert ist, daß es vor einer übermäßigen Verformung der Sensoreinrichtung (132) an dem Rohrabschnitt oder/und dem weiteren Rohrabschnitt (130) anschlägt.

7. Vorrichtung nach einem der Ansprüche 3 bis 6,
**dadurch gekennzeichnet, daß** ein erster Teil (132a) der Sensoreinrichtung (132) an dem Basisteil (112a) befestigt ist und ein zweiter Teil (132b) der Sensoreinrichtung (132) mit einem Stützeinheit-festen Teil (186) des Kugelgelenks (124/126) kipp- und drehfest verbunden, sowie bei einer Nach-unten-Bewegung des Stützeinheit-festen Teils des Kugelgelenks relativ zum zweiten Teil (132b) der Sensoreinrichtung (132) mit diesem in Mitnahmeeingriff bringbar ist.

8. Vorrichtung nach einem der Ansprüche 1 bis 7,
**dadurch gekennzeichnet, daß** eine Kipp-Rückstellvorrichtung (40) vorgesehen ist, welche einem Verkippen der Stützfläche (74; 174) entgegenwirkt.

9. Vorrichtung nach Anspruch 8,
**dadurch gekennzeichnet, daß** die Kipp-Rückstellvorrichtung wenigstens ein komprimierbares Element, vorzugsweise wenigstens ein mit einem komprimierbaren Medium gefülltes Element (40), beispielsweise einen Druckluftschlauch, umfaßt.

10. Vorrichtung nach einem der Ansprüche 1 bis 9,
**dadurch gekennzeichnet, daß** eine Dreh-Rückstellvorrichtung (48) vorgesehen ist, welche einem Verdrehen der Stützfläche (74; 174) entgegenwirkt.

11. Vorrichtung nach Anspruch 10,
**dadurch gekennzeichnet, daß** die Dreh-Rückstellvorrichtung wenigstens ein elastisches, vorzugsweise gummi- oder federelastisches Element (48) umfaßt, das einenends (bei 50) an dem Stützteil und andernends an dem Zwischenteil angelenkt ist, wobei vorzugsweise vorgesehen ist, daß eine der Anlenkstellen des wenigstens einen elastischen Elements (48) an einem auf einer Schraubspindel (54) verstellbaren Schlitten (52) ausgebildet ist.

12. Vorrichtung nach einem der Ansprüche 1 bis 11,
**dadurch gekennzeichnet, daß** eine Rückstellvorrichtung (40) vorgesehen ist, welche einer Vertikalbewegung der Stützfläche (74) entgegenwirkt.

13. Vorrichtung nach Anspruch 12,
**dadurch gekennzeichnet, daß** die Vertikal-Rückstellvorrichtung wenigstens ein komprimierbares Element, vorzugsweise wenigstens ein mit einem komprimierbaren Medium gefülltes Element (40), beispielsweise einen Druckluftschlauch, umfaßt.

14. Vorrichtung nach einem der Ansprüche 8 bis 13,
**dadurch gekennzeichnet, daß** die Rückstellkraft wenigstens einer der Rückstellvorrichtungen (40, 48) veränderbar ist.

15. Vorrichtung nach einem der Ansprüche 1 bis 14,
**dadurch gekennzeichnet, daß** eine Kipp-Rastvorrichtung (56/58; 192) vorgesehen ist, welche erst bei Ausübung eines ein vorbestimmtes Kippmoment übersteigenden Kippmoments auf die Stützfläche (74; 174) ein Verkippen dieser Stützfläche aus einer Ausgangslage (siehe Figur 1) zuläßt.

16. Vorrichtung nach einem der Ansprüche 1 bis 15,
**dadurch gekennzeichnet, daß** eine Dreh-Rastvorrichtung (62/64; 192) vorgesehen ist, welche erst bei Ausübung eines ein vorbestimmtes Drehmoment übersteigenden Drehmoments auf die Stützfläche (74; 174) ein Verdrehen dieser Stützfläche zuläßt.

17. Vorrichtung nach einem der Ansprüche 1 bis 16,
**dadurch gekennzeichnet, daß** eine Vertikal-Rastvorrichtung (66/68) vorgesehen ist, welche erst bei Ausübung eines einen vorbestimmten Impuls übersteigenden Impulses auf die Stützfläche (74) eine Vertikalbewegung dieser Stützfläche zuläßt.

18. Vorrichtung nach einem der Ansprüche 15 bis 17,
**dadurch gekennzeichnet, daß** wenigstens eine der Rastvorrichtungen einen Raststift (192) an der Stützeinheit (118/142) oder dem Basisteil, sowie eine zugehörige Rastvertiefung (192b) an Basisteil (112a) oder Stützeinheit umfaßt, wobei der Raststift in die Rastvertiefung vorzugsweise federvorgespannt (192c) ist.

19. Vorrichtung nach Anspruch 18,
**dadurch gekennzeichnet, daß** wenigstens drei Raststifte (192) vorgesehen sind, welche jeweils mit einer sich in im wesentlichen vertikaler Richtung über eine vorbestimmte Länge erstreckenden Rastvertiefung oder mit einem Rastpunkt zusammenwirken.

20. Vorrichtung nach einem der Ansprüche 1 bis 19,
**dadurch gekennzeichnet, daß** eine Kippwinkel-Begrenzungsvorrichtung (194; 198/199) oder/und eine Drehwinkel-Begrenzungsvorrichtung (191/193) oder/und eine Vertikalbewegungs-Begrenzungsvorrichtung (128/130a) vorgesehen ist.

21. Vorrichtung nach einem der Ansprüche 1 bis 20,
**dadurch gekennzeichnet, daß** die Ausgangslage (Figur 1) der Lagervorrichtung (12) relativ zu einem Untergrund (16) veränderbar ist (mittels 14).

22. Vorrichtung nach einem der Ansprüche 1 bis 21,
**dadurch gekennzeichnet, daß** die Stützfläche eine rutschfeste Oberflächenbeschichtung (74) aufweist.

23. Vorrichtung nach einem der Ansprüche 1 bis 22,
**dadurch gekennzeichnet, daß** auf der Stützfläche wenigstens eine Halteschlaufe (76) bzw. Bindung für einen Fuß des Benutzers vorgesehen ist.

24. Vorrichtung nach einem der Ansprüche 1 bis 23,
**dadurch gekennzeichnet, daß** die Sensoreinrichtung eine optoelektronische Sensoreinrichtung (32; 132) ist.

25. Vorrichtung nach einem der Ansprüche 1 bis 24,
**dadurch gekennzeichnet, daß** sie wenigstens einen Anschluß (78) für eine weitere Vorrichtung zur Erfassung von Bewegungen des Benutzers, bspw. für einen Cyber-Handschuh, umfaßt.

26. Vorrichtung nach einem der Ansprüche 1 bis 25,
**dadurch gekennzeichnet, daß** sie wenigstens einen Anschluß (80) für ein visuelles oder/und akustisches Ausgabegerät aufweist.

27. Vorrichtung nach Anspruch 25 oder 26,
**dadurch gekennzeichnet, daß** wenigstens einem der Anschlüsse (78, 80) eine standardisierte Schnittstelle für eine Datenverarbeitungsanlage zugeordnet ist, bspw. eine standardisierte serielle oder parallele Schnittstelle.

## Claims

1. Device (10;110) for detecting certain states of movement of the body of a user and for generating signals corresponding to the result of the detection for subsequent processing in a data processing system, comprising:
- a bearing device (12; 112) for the body of the user, which device comprises a support unit (18/42; 118/142) which is mounted in a tiltable manner on a base part (12a; 112a) and has a support surface (74; 174) for supporting the body of the user, and
- a sensor device (32; 132) for detecting the direction and the magnitude of the position of the projection of the body's centre of gravity into the support surface (74; 174) relative to a predetermined original position (point of intersection of the axis A with the support surface 74 or 174) in the support surface (74; 174) from the direction and the magnitude of a tilt of the support surface (74; 174) and for generating corresponding sensor signals,
**characterised in that** the support surface (74; 174) is mounted on the base part (12a, 112a) such that it can also rotate about a substantially vertical axis (A) or/and move in the direction (Z) of this substantially vertical axis (A), and
that the sensor device (32; 132) is also formed to detect the direction and the magnitude of a rotational movement of the body of the user about the substantially vertical axis (A) or/and to detect at least the magnitude of a vertical movement of the body's centre of gravity, as well as to generate corresponding sensor signals.

2. Device according to claim 1,
**characterised in that** the support unit (18/42; 118/142) comprises a support part (18; 118), which has the support surface (74; 174), and an intermediate part (42; 142), which is disposed between the support part (18; 118) and the base part (12a; 112a), wherein this intermediate part (42; 142) is connected to the support part (18; 118) such that it tilts with it, yet can turn relative to it; and wherein the intermediate part (42; 142) is preferably connected to the base part (12a; 112a) in a rotationally rigid manner.

3. Device according to claim 1 or 2,
**characterised in that** the support unit (18/42; 118/142) is connected to the base part (12a; 112a) such that it can tilt and rotate about the substantially vertical axis (A) by means of a ball-and-socket joint (24/26; 124/126).

4. Device according to claim 3,
**characterised in that** the ball-and-socket joint (24/26; 124/126) is provided at a tubular section (28; 128) which is telescopically guided at a further tubular section (30; 130) secured to the base part (12a; 112a).

5. Device according to claim 4,
**characterised in that** the sensor device (32; 132) is disposed at least partly in a holding space (182) defined by the tubular section (28; 128), the further tubular section (30; 130) and the base part (12a; 112a).

6. Device according to claim 4 or 5,
**characterised in that** the sensor device (132) is disposed in a protective housing (186) which is formed and dimensioned such that it strikes against the tubular section or/and the further tubular section (130) before the sensor device (132) is deformed to excess.

7. Device according to any one of claims 3 to 6,
**characterised in that** a first part (132a) of the sensor device (132) is secured to the base part (112a) and a second part (132b) of the sensor device (132) is connected to a part (186) of the ball-and-socket joint (124/126) which is fixed to the support unit so as to tilt and rotate with it and, when the part of the ball-and-socket joint which is fixed to the support unit moves downwards relative to the second part (132b) of the sensor device (132), can be brought into pulling engagement with this.

8. Device according to any one of claims 1 to 7,
**characterised in that** a tilt restoring device (40) is provided which opposes tilting of the support surface (74; 174).

9. Device according to claim 8,
**characterised in that** the tilt restoring device comprises at least one compressible element, preferably at least one element (40) filled with a compressible medium, for example a compressed-air hose.

10. Device according to any one of claims 1 to 9,
**characterised in that** a rotational restoring device (48) is provided which opposes a turning movement of the support surface (74; 174).

11. Device according to claim 10,
**characterised in that** the rotational restoring device comprises at least one elastic, preferably elastomeric or spring-elastic element (48) which is articulated at one end (at 50) to the support part and at the other to the intermediate part, wherein one of the articulation points of the - at least one - elastic element (48) is preferably formed at a slide (52) which can be displaced on a screw spindle (54).

12. Device according to any one of claims 1 to 11,
**characterised in that** a restoring device (40) is provided which opposes a vertical movement of the support surface (74).

13. Device according to claim 12,
**characterised in that** the vertical restoring device comprises at least one compressible element, preferably at least one element (40) filled with a compressible medium, for example a compressed-air hose.

14. Device according to any one of claims 8 to 13,
**characterised in that** the restoring force of at least one of the restoring devices (40, 48) is variable.

15. Device according to any one of claims 1 to 14,
**characterised in that** a tilt detent device (56/58; 192) is provided which only allows the support surface (74; 174) to tilt out of an initial position (see Figure 1) upon a tilting moment which exceeds a predetermined tilting moment being exerted on this support surface.

16. Device according to any one of claims 1 to 15,
**characterised in that** a rotational detent device (62/64; 192) is provided which only allows the support surface (74; 174) to turn upon a torque which exceeds a predetermined torque being exerted on this support surface.

17. Device according to any one of claims 1 to 16,
**characterised in that** a vertical detent device (66/68) is provided which only allows the support surface (74) to execute a vertical movement upon an impulse which exceeds a predetermined impulse being exerted on this support surface.

18. Device according to any one of claims 15 to 17,
**characterised in that** at least one of the detent devices comprises a detent pin (192) at the support unit (118/142) or the base part, as well as an associated detent depression (192b) at the base part (112a) or support unit, wherein the detent pin is,preloaded by a spring (192c) into the detent depression.

19. Device according to claim 18,
**characterised in that** at least three detent pins (192) are provided which each co-operate with a detent depression extending in a substantially vertical direction over a predetermined length or with a detent point.

20. Device according to any one of claims 1 to 19,
**characterised in that** an angle of tilt limiting device (194; 198/199) or/and a rotational angle limiting device (191/193) or/and a vertical movement limiting device (128/130a) is/are provided.

21. Device according to any one of claims 1 to 20,
**characterised in that** the initial position (Figure 1) of the bearing device (12) relative to a foundation (16) is variable (by means of 14).

22. Device according to any one of claims 1 to 21,
**characterised in that** the support surface comprises a non-slip surface coating (74).

23. Device according to any one of claims 1 to 22,
**characterised in that** at least one retaining loop (76) or tie for a foot of the user is provided on the support surface.

24. Device according to any one of claims 1 to 23,
**characterised in that** the sensor device is an optoelectronic sensor device (32; 132).

25. Device according to any one of claims 1 to 24,
**characterised in that** it comprises at least one connection (78) for a further device for detecting movements of the user, for example for a cyber-glove.

26. Device according to any one of claims 1 to 25,
**characterised in that** it comprises at least one connection (80) for a visual or/and acoustic output unit.

27. Device according to claim 25 or 26,
**characterised in that** a standardised interface for a data processing system, for example a standardised serial or parallel interface, is associated with at least one of the connections (78, 80).

## Revendications

1. Dispositif (10 ; 110) de détection de certains états de mouvement du corps d'un utilisateur et de production de signaux, correspondant au résultat de la détection, destinés à être traités dans un système de traitement de données, comprenant :
- un dispositif support (12; 112) destiné au corps de l'utilisateur, qui comprend une plaque d'appui (18/42 ; 118/142), montée basculante sur une plaque de base (12a ; 112a), présentant une surface d'appui (74 ; 174) pour soutenir le corps de l'utilisateur, ainsi qu'
- un dispositif de détection (32 ; 132) destiné à détecter la direction et la valeur de la position de la projection du centre de gravité du corps dans la surface d'appui (74 ; 174), par rapport à une position d'origine prédéterminée (point d'intersection de l'axe A avec la surface d'appui (74 ou 174)) dans la surface d'appui (74 ; 174), à partir de la direction et de la valeur d'un basculement de la surface d'appui (74 ; 174) et afin de produire des signaux de détection correspondants,
**caractérisé en ce que**
la surface d'appui (74 ; 174), en outre, est montée sur la plaque de base (12a ; 112a) avec possibilité de pivoter autour d'un axe (A) sensiblement vertical et/ou est montée déplaçable en direction (Z) de cet axe (A) sensiblement vertical, et
**en ce que le** dispositif de détection (32 ; 132) est adapté, en outre, pour détecter la direction et la valeur d'une rotation du corps de l'utilisateur autour de l'axe (A) sensiblement vertical et/ou pour détecter au moins la valeur d'un déplacement vertical du centre de gravité du corps, ainsi que pour produire des signaux de détection correspondants.

2. Dispositif selon la revendication 1,
**caractérisé en ce que** la plaque d'appui (18/42 ; 118/142) comprend une partie d'appui (18 ; 118) présentant la surface d'appui (74 ; 174) et une partie intermédiaire (42 ; 142), située entre la partie d'appui (18 ; 118) et la partie de base (12a ; 112a), cette partie intermédiaire (42 ; 142) étant reliée sans possibilité de basculement avec la partie d'appui (18 ; 118), mais pouvant cependant tourner par rapport à celle-ci, et la partie intermédiaire (42 ; 142) étant, de préférence, reliée de façon non tournante avec la partie de base (12a ; 112a).

3. Dispositif selon la revendication 1 ou 2,
**caractérisé en ce que** la plaque d'appui (18/42 ; 118/142) est reliée à la partie de base (12a ; 112a) avec possibilité de basculement, au moyen d'une articulation sphérique (24/26 ; 124/126), et est susceptible de pivoter autour de l'axe (A) sensiblement vertical.

4. Dispositif selon la revendication 3,
**caractérisé en ce que** l'articulation sphérique (24/26 ; 124/126) est prévue sur un tronçon de tube (28 ; 128) qui est monté de façon téléscopique sur un autre tronçon de tube (30 ; 130) qui est fixé sur la partie de base (12a; 112a).

5. Dispositif selon la revendication 4,
**caractérisé en ce que** le dispositif de détection (32 ; 132) est disposé, au moins partiellement, dans un espace formant logement (182) délimité par le tronçon de tube (28 ; 128), l'autre tronçon de tube (30 ; 130) et la partie de base (12a ; 112a).

6. Dispositif selon la revendication 4 ou 5,
**caractérisé en ce que** le dispositif de détection (132) est disposé dans un boîtier protecteur (186) qui est conçu et dimensionné de telle sorte qu'il vient buter contre le tronçon de tube et/ou l'autre tronçon de tube (130) avant que le dispositif de détection (132) ne se déforme excessivement.

7. Dispositif selon l'une des revendications 3 à 6,
**caractérisé en ce qu**'une première partie (132a) du dispositif de détection (132) est fixée sur la partie de base (112a) et une deuxième partie (132b) du dispositif de détection (132) est reliée, sans possibilité de basculer et de tourner, avec une partie (186) solidaire de la plaque d'appui de l'articulation sphérique (124/126) et en ce que, lorsque la partie dé l'articulation sphérique qui est solidaire de la plaque d'appui se déplace vers le bas, par rapport à la deuxième partie (132b), le dispositif de détection (132) est susceptible de se lier en entraînement avec elle.

8. Dispositif selon l'une des revendications 1 à 7,
**caractérisé en ce qu**'est prévu un dispositif de rappel de basculement (40) qui contrecarre un basculement de la surface d'appui (74 ; 174).

9. Dispositif selon la revendication 8,
**caractérisé en ce que** le dispositif de rappel de basculement comprend au moins un élément compressible, de préférence au moins un élément (40) rempli d'un fluide compressible, par exemple un flexible à air comprimé.

10. Dispositif selon l'une des revendications 1 à 9,
**caractérisé en ce qu**'est prévu un dispositif de rappel de rotation (48) qui contrecarre une rotation de la surface d'appui (74 ; 174).

11. Dispositif selon la revendication 10,
**caractérisé en ce que** le dispositif de rappel de rotation comprend au moins un élément élastique (48), de préférence en caoutchouc ou ayant l'élasticité d'un ressort, qui est articulé, à une extrémité (en 50), sur la partie d'appui et, à l'autre extrémité, sur la partie intermédiaire, l'un des points d'articulation de l'élément élastique (48), au nombre minimum d'un, étant, de préférence, prévu sur un chariot (52) déplaçable sur une tige filetée (54).

12. Dispositif selon l'une des revendications 1 à 11,
**caractérisé en ce qu**'est prévu un dispositif de rappel (40) qui contrecarre un déplacement vertical de la surface d'appui (74).

13. Dispositif selon la revendication 12,
**caractérisé en ce que** le dispositif de rappel de déplacement vertical comprend au moins un élément compressible, de préférence au moins un élément (40) rempli d'un fluide compressible, par exemple un flexible à air comprimé.

14. Dispositif selon l'une des revendications 8 à 13,
**caractérisé en ce que** la force de rappel d'au moins un des dispositifs de rappel (40, 48) est susceptible d'être modifiée.

15. Dispositif selon l'une des revendications 1 à 14,
**caractérisé en qu**'est prévu un dispositif de basculement à crans (56/58 ; 192) qui ne permet à la surface d'appui de basculer hors de sa position de départ (voir figure 1) que lorsqu'est appliqué, sur la surface d'appui (74 ; 174), un couple de basculement supérieur à un couple de basculement prédéterminé.

16. Dispositif selon l'une des revendications 1 à 15,
**caractérisé en ce qu**'est prévu un dispositif de rotation à crans (62/64 ; 192) qui ne permet à la surface d'appui de tourner hors de sa position de départ que lorsqu'est appliqué, sur la surface d'appui (74 ; 174), un couple de rotation supérieur à un couple de rotation prédéterminé.

17. Dispositif selon l'une des revendications 1 à 16,
**caractérisé en ce qu'**est prévu un dispositif de déplacement vertical à crans (66/68) qui ne permet à la surface d'appui de se déplacer verticalement que lorsqu'est appliquée, sur la surface d'appui (74), une impulsion supérieure à une impulsion prédéterminée.

18. Dispositif selon l'une des revendications 15 à 17,
**caractérisé en ce qu**'au moins un des dispositifs à crans comprend un doigt d'enclenchement (192) présent sur la plaque d'appui (118/142) ou sur la partie de base, ainsi qu'un évidement d'enclenchement (192b) correspondant, présent sur la partie de base (112a) ou sur la plaque d'appui, le doigt d'enclenchement étant, de préférence, précontraint élastiquement (192c) dans l'évidement d'enclenchement.

19. Dispositif selon la revendication 18,
**caractérisé en ce que** sont prévus au moins trois doigts d'enclenchement (192) qui coopèrent, chacun, avec un évidement d'enclenchement ou avec un point d'enclenchement s'étendant sur une longueur prédéterminée dans une direction sensiblement verticale.

20. Dispositif selon l'une des revendications 1 à 19,
**caractérisé ce que** sont prévus un dispositif limitant l'angle de basculement (194 ; 198/199) et/ou un dispositif limitant l'angle de rotation (191/193) et/ou un dispositif limitant le déplacement vertical (128/130a).

21. Dispositif selon l'une des revendications 1 à 20,
**caractérisé ce que** la position de départ (Figure 1) du dispositif support (12) par rapport au sol (16) est susceptible d'être modifiée (au moyen de 14).

22. Dispositif selon l'une des revendications 1 à 21,
**caractérisé en ce que** la surface d'appui présente un revêtement de surface (74) anti-glisse.

23. Dispositif selon l'une des revendications 1 à 22,
**caractérisé en ce qu**'est prévue, sur la surface d'appui, au moins une boucle de maintien (76) ou une attache destinée au pied de l'utilisateur.

24. Dispositif selon l'une des revendications 1 à 23,
**caractérisé en ce que** le dispositif de détection est un dispositif de détection (32 ; 132) optoélectronique.

25. Dispositif selon l'une des revendications 1 à 24,
**caractérisé en ce qu**'il comprend au moins- une sortie (78) destinée à un autre dispositif de détection des mouvements de l'utilisateur, par exemple un cyber-gant.

26. Dispositif selon l'une des revendications 1 à 25,
**caractérisé en ce qu**'il comprend au moins une sortie (80) destinée à une extension visuelle et/ou acoustique.

27. Dispositif selon la revendication 25 ou 26,
**caractérisé en ce qu**'est associée à au moins l'une des entrées (78, 80) une interface standardisée destinée à un système de traitement de données, par une exemple une interface sérielle ou parallèle standardisée.
